# EUROPÄISCHE PATENTSCHRIFT

(11) **EP 3 725 190 B1**
(45) Veröffentlichungstag und Bekanntmachung des Hinweises auf die Patenterteilung: **01.06.2022**
(21) Anmeldenummer: 20167752.3
(22) Anmeldetag: 02.04.2020
(51) Int. Cl.: A47J 29/06

(54) **EIERHALTER EINER EIERBEARBEITUNGSVORRICHTUNG**
EGG HOLDER FOR AN EGG PROCESSING DEVICE
PORTE-OEUFS D'UN DISPOSITIF DE TRAITEMENT DES OEUFS

(30) Priorität: 15.04.2019 DE 202019102138 U
(43) Veröffentlichungstag der Anmeldung: 21.10.2020
(73) Patentinhaber: Bergmeier, Gerd, 32120 Hiddenhausen (DE)
(72) Erfinder: Bergmeier, Gerd, 32120 Hiddenhausen (DE)
(74) Vertreter: Dantz, Jan Henning

(56) Entgegenhaltungen:
- EP-A1- 0 423 046
- CN-U- 202 617 998
- CN-U- 204 450 661
- CN-Y- 2 659 823
- DE-U1-202017 004 980
- KR-U- 20100 002 676
- US-A- 1 212 976

## Beschreibung

Die vorliegende Erfindung betrifft einen auf einer Schiene festlegbaren Eierhalter einer Eierbearbeitungsvorrichtung zur Aufnahme eines Eies gemäß dem Oberbegriff des Anspruchs 1.

Zum Transport ungeschälter Eier innerhalb einer Eierbearbeitungsmaschine, in der eine Vielzahl von Eiern sortiert, gekocht, gereinigt oder in sonstiger Weise behandelt werden, müssen die einzelnen Eier in der Regel in aufrechtstehender Position transportiert werden. Dazu ist beispielsweise aus der DE 195 31 322 C1 ein Eierhalter bekannt, der im Wesentlichen aus einem um eine lotrechte Rotationsachse drehbaren Sockel und mehreren an diesem Sockel befestigten Stützdrähten besteht, wobei einer der Stützdrähte das Ei von unten abstützt und mindestens drei weitere Stützdrähte das Ei seitlich halten. Das Dokument WO2017015253 beschreibt einen weiteren Eierhalter.

Diese Abstützung eines Eies mithilfe dieser Stützdrähte hat sich in der Praxis durchaus bewährt und ist insbesondere vorteilhaft bei der möglichst vollflächigen Einfärbung eines Eies, bei der es wichtig ist, dass der Eierhalter möglichst wenig Kontakt mit der Oberfläche des Eies hat.

Bei anderen Behandlungsarten des Eies, bei denen zur Halterung des Eies auch größere Flächen des Eies bedeckt sein können, ist es allerdings sinnvoller, die Abstützung des Eies über größere Kontaktflächen zu bewerkstelligen. Insbesondere kann dadurch vermieden werden, dass bei der Bestückung eines Eierhalters mit einem Ei, beispielsweise durch Loslösen eines Eies aus einem Saugnapf oder dergleichen, über den das Ei zu dem Eierhalter transportiert wird, auch ein Herabfallen des Eies aus geringer Höhe in den Eierhalter möglich ist, ohne die Eierschale dabei zu beschädigen.

Aufgabe der vorliegenden Erfindung ist es, einen Eierhalter einer Eierbearbeitungsmaschine bereitzustellen, der ein Ei zuverlässig aufnehmen kann, dabei die Eischale aber nicht beschädigt wird und das Ei dabei zuverlässig vertikal ausrichten kann.

Diese Aufgabe wird durch einen Eierhalter einer Eierbearbeitungsmaschine mit den Merkmalen des Anspruchs 1 gelöst.

Der erfindungsgemäße Eierhalter weist dabei eine einen Aufnahmeraum bildende kegelstufenförmigen Wandung auf, eine obere Öffnung und eine untere Öffnung, wobei ein Durchmesser der oberen Öffnung größer ist als ein Durchmesser der unteren Öffnung und wobei die Wandung einen Ausrichtungsbereich und einen Haltebereich aufweist, wobei von einer die untere Öffnung bildenden Kante der Wandung mehrere erste Schlitze in den Haltebereich der Wandung und von einer die obere Öffnung bildenden Kante der Wandung mehrere zweite und/oder dritte Schlitze in den Ausrichtungsbereich der Wandung eingebracht sind.

Durch den Ausrichtungsbereichs der Wandung ist es ermöglicht, dass das Ei beim Eintritt in den Aufnahmeraum an dem den Ausrichtungsbereich bildenden Teil der Wandung nach unten rutscht und so stets in eine vertikale oder nahezu vertikale Stellung in den Eierhalter rutscht. Durch die Schlitze im Ausrichtungsbereich und im Haltebereich der Wandung ist dabei ein federndes Hineingleiten des Eies in den Aufnahmeraum des Eierhalters gewährleist, so dass ein Entstehen von Rissen in der Eischale des Eies beim Hineingleiten des Eies wirksam verhindert wird.

Vorteilhafte Ausführungsvarianten der Erfindung sind Gegenstand der Unteransprüche.

Gemäß einer vorteilhaften Ausführungsvariante des erfindungsgemäßen Eierhalters ist die Länge der zweiten Schlitze im Ausrichtungsbereich größer ist als die Länge der dritten Schlitze im Ausrichtungsbereich.

Dadurch ist eine hinreichende Stabilität des Eierhalters bei gleichzeitiger Nachgiebigkeit, insbesondere im oberen Bereich des Eierhalters gewährleistet.

Nach einer weiteren vorteilhaften Ausführungsvariante sind die ersten Schlitze des Haltebereichs auf einer gedachten Verlängerungslinie der dritten Schlitze des Ausrichtungsbereichs eingebracht sind. Auch dadurch ist eine sanfte Aufnahme des Eies nochmals verbessert. Gleichzeitig wird durch die geringere Anzahl an Schlitzen im Haltebereich ein Durchrutschen des Eies auf eine den Eierhalter haltende Schiene verhindert.

Nach einer weiteren bevorzugten Ausführungsvariante des erfindungsgemäßen Eierhalters ist der an die obere Öffnung angrenzende Ausrichtungsbereich der Wandung steiler ausgerichtet ist als der an die untere Öffnung angrenzende Haltebereich der Wandung. Insbesondere beträgt der Neigungswinkel des Ausrichtungsbereich zur durch den die untere Öffnung begrenzenden unteren Rand definierten Ebene zwischen 70° und 80°, bevorzugt zwischen 74° und 76,5°.

In einer vorteilhaften Weiterbildung der Erfindung ist der Ausrichtungsbereich der Wandung mehrstufig geformt.

Dabei beträgt der Neigungswinkel einer dem Haltebereich entfernten ersten Stufe des Ausrichtungsbereichs oberhalb des um den bevorzugt zwischen 70° und 80° geneigten Wandungsbereiches zur durch den die untere Öffnung begrenzenden unteren Rand definierten Ebene 90°.

Eine solche Stufe mit senkrechter Wandung ermöglicht eine nochmals verbesserte Ausrichtung der Eier im Eierhalter.

Gemäß einer vorteilhaften Weiterbildung schließt sich an diese erste Stufe noch eine zweite Stufe an, die zwischen einer oberen Kante des Eierhalters und der ersten Stufe ausgebildet ist und deren Neigungswinkel zur durch den die untere Öffnung begrenzenden unteren Rand definierten Ebene weniger als 70° beträgt.

Nach einer weiteren bevorzugten Ausführungsvariante ist die Außenfläche der Wandung im Bereich des Haltebereichs mit einer sich in Umfangsrichtung erstreckenden Nut versehen, um eine möglichst breite Adaptierbarkeit an unterschiedlich gestaltete Schienen, die den Eierhalter halten, zu ermöglichen.

Nachfolgend werden Ausführungsbeispiele der Erfindung anhand der beiliegenden Zeichnungen näher erläutert. Es zeigen:
- Figur 1: eine perspektivische Ansicht einer Ausführungsvariante eines erfindungsgemäßen Eierhalters,
- Figur 2: eine Seitenschnittansicht des Eierhalters aus Figur 1, wobei die Schnittebene vertikal mittig durch den Eierhalter führt
- Figur 3: eine Draufsicht auf den Eierhalter aus Figur 1,
- Figur 4 und 5: perspektivische Ansichten einer weiteren Ausführungsvariante eines erfindungsgemäßen Eierhalters,

- Figur 6: eine Draufsicht auf den Eierhalter gemäß der Figuren 4 und 5 mit Darstellung von Schnittebenen, und
- Figur 7 und 8: Seitenschnittansichten des Eierhalters gemäß der Figuren 4 und 5, durch die in Figur 6 dargestellten Schnittebenen.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Eierhalter, Wandung, Haltebereich, Ausrichtungsbereich, Schlitze und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

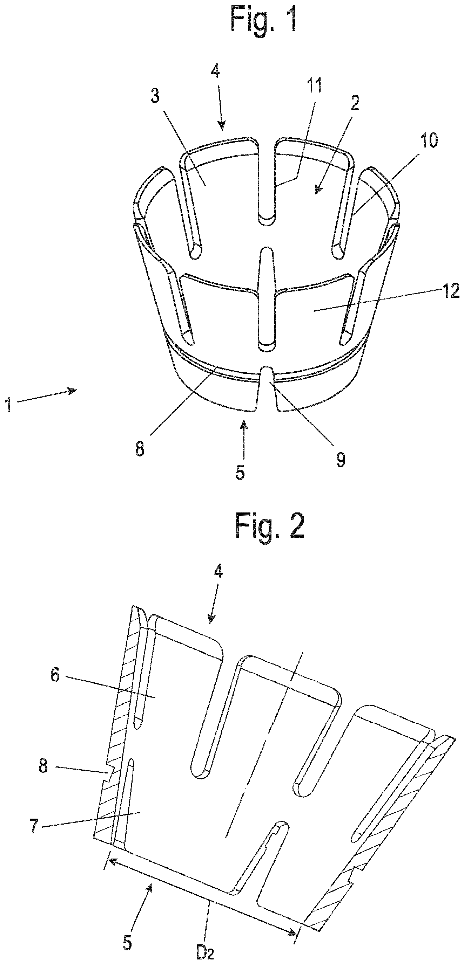

In Figur 1 ist mit dem Bezugszeichen 1 insgesamt eine erste Ausführungsvariante eines erfindungsgemäßen Eierhalters bezeichnet.

Der Eierhalter 1 besteht dabei im Wesentlichen aus einer zumindest teilweise kegelstumpfförmigen Wandung 3, die einen innerhalb dieser Wandung 3 vorgesehenen Aufnahmeraum 2 zur Aufnahme eines Eies bildet, das über eine obere Öffnung 4 in den Aufnahmeraum 2 eingelegt, abgesenkt oder aus geringer Höhe fallen gelassen werden kann.

Der Eierhalter 1 weist des Weiteren eine untere Öffnung 5 auf, wobei der Durchmesser D1 der oberen Öffnung 4 größer ist als der Durchmesser D2 der unteren Öffnung 5. Der Durchmesser D2 der unteren Öffnung 5 ist dabei so bemessen, dass das in dem Eierhalter 1 aufzunehmende Ei nicht durch diese untere Öffnung 5 hindurch gleiten kann, sondern nur bis zu einem gewissen Maß in diese Öffnung 5 einzutauchen vermag.

Für die Außenabmessungen der hier betrachteten Eier werden dabei Außenabmessungen innerhalb vorbestimmter Normmaße angenommen, so dass die Abmessungen des Eierhalters 1 in der Regel zur Aufnahme von Hühnereiern der gängigen Güteklassen bemessen sind. Möglich sind aber auch andere Größen des Eierhalters, welche zur Aufnahme von Eiern anderer Vogelarten oder Reptilien geeignet sind.

Die zumindest teilweise kegelstufenförmige Wandung 3 weist dabei, wie in den Figuren 1 und 2 gut erkennbar ist, einen Ausrichtungsbereich 6 und einen Haltebereich 7 auf. Der Ausrichtungsbereich 6 grenzt dabei an die obere Öffnung 4 der Wandung 3 an.

Denkbar ist, den Ausrichtungsbereich 6 geringfügig steiler auszurichten als den an die untere Öffnung 5 angrenzenden Haltebereich 7 der Wandung, bevorzugt um wenige Grad steiler, insbesondere um 1° bis 3° steiler.

Der Neigungswinkel des Ausrichtungsbereich 6 zur durch den die untere Öffnung 5 begrenzenden unteren Rand definierten Ebene beträgt bevorzugt zwischen 70° und 80°, bevorzugt zwischen 74° und 76,5°.

Dies ermöglicht, dass ein über die obere Öffnung 4 in den Aufnahmeraum 2 des Eierhalters 1 eintretendes Ei schwerkraftbedingt an dem Ausrichtungsbereich 6 entlang gleitet und erst im Haltebereich 7 nach Erreichen einer vertikalen oder nahezu vertikalen Position im Eierhalter 1 in dieser Position gehalten wird.

Um bei der Übergabe des Eies in den Eierhalter die Ausbildung von Rissen, auch Mikrostrukurrisse in der Eischale des Eies zu vermeiden, sind von einer die untere Öffnung 5 bildenden Kante der Wandung 3 mehrere erste Schlitze 9 in den Haltebereich 7 der Wandung 3 und von einer die obere Öffnung 4 bildenden Kante der Wandung 3 mehrere zweite und/oder dritte Schlitze 10, 11 in den Ausrichtungsbereich 6 der Wandung 3 eingebracht.

Durch die Einbringung der Schlitze 10, 11 im Ausrichtungsbereich 6 der Wandung 3 wird die Wandung in mehrere nachgiebige Zungen 12 unterteilt, die ein über die obere Öffnung 4 in den Eierhalter 1 eintretendes Ei äußerst flexibel aufnehmen, so dass eine Beschädigung der Eischale des Eies äußerst unwahrscheinlich wird.

Die Schlitze 9 im Haltebereich 7 der Wandung 3 dienen zum einen der Aufnahme und Lagerung des Eierhalters 1 auf einer hier nicht dargestellten Schiene einer Eierbearbeitungsvorrichtung, auf der eine Vielzahl solcher Eierhalter hintereinander oder nebeneinander aufgestellt sind.

Desweiteren dienen die Schlitze 9 im Haltebereich 7 der Wandung 3 dazu, ein Festsetzen bzw. zu starkes Verklemmen des Eies zu verhindern, so dass das Ei zu einem späteren Zeitpunkt, wenn es beispielsweise mithilfe eines Saugers oder Greifers wieder aus dem Eierhalter 1 entnommen werden soll, nicht so fest im Eierhalter festsitzt, dass beim Herauslösen des Eies aus dem Eierhalter aufgrund der dafür aufzuwendenden Kraft Risse in der Eischale entstehen.

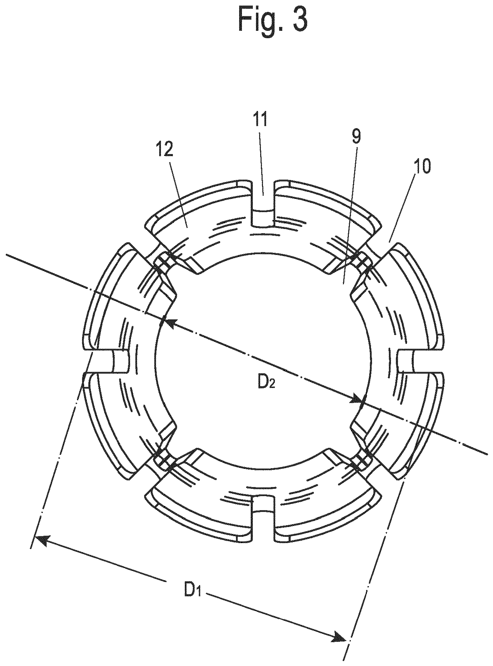

Die Schlitze 9, 10, 11 sind, wie in den Figuren 1 bis 3 zu erkennen ist, bevorzugt senkrecht zur durch den die untere Öffnung 5 begrenzenden unteren Rand definierten Ebene ausgerichtet.

Wie insbesondere in Figur 2 gut erkennbar, ist die Länge der zweiten Schlitze 10 im Ausrichtungsbereich 6 größer als die Länge der dritten Schlitze 11 im Ausrichtungsbereich 6.

Die ersten Schlitze 9 des Haltebereichs 7 sind dabei bevorzugt auf einer gedachten Verlängerungslinie der dritten Schlitze 11 des Ausrichtungsbereichs 6 eingebracht.

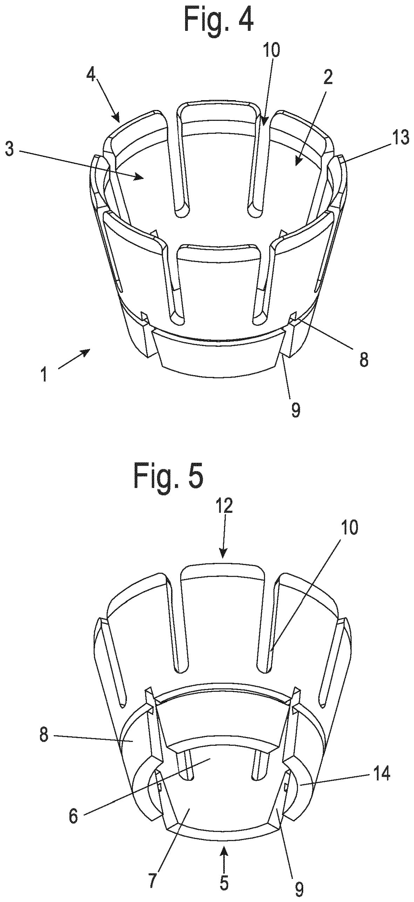

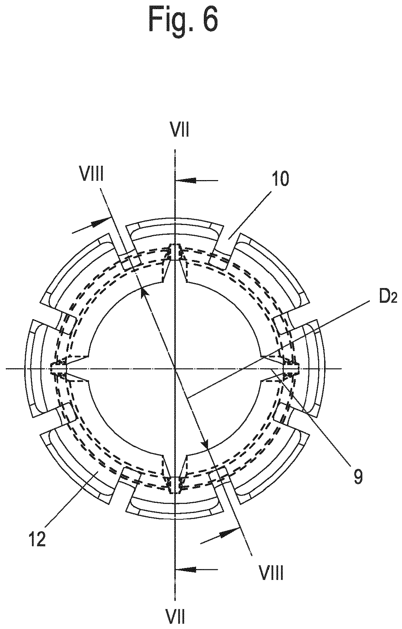

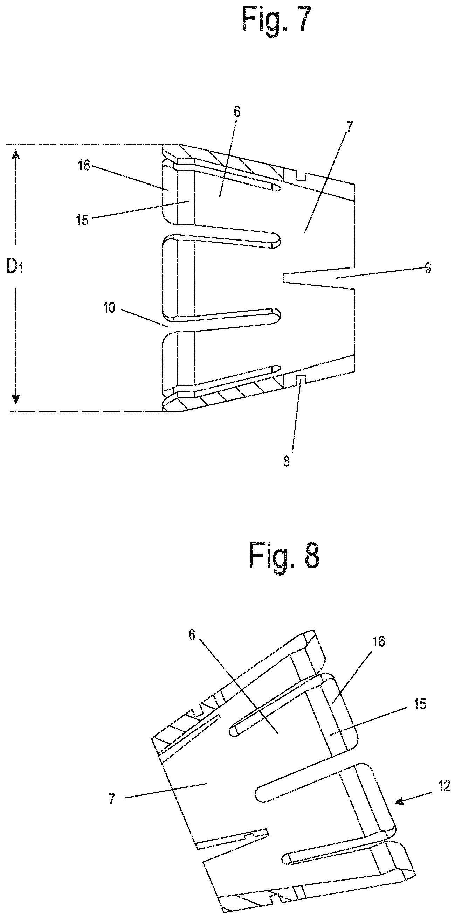

Eine alternative Ausführungsvariante eines erfindungsgemäßen Eierbechers ist in den Figuren 4 bis 8 gezeigt.

Der Aufbau der in diesen Figuren gezeigten Ausführungsvariante entspricht prinzipiell dem Aufbau der anhand der Figuren 1 bis 3 beschriebenen ersten Ausführungsvariante.

Im Unterschied zur dieser weist der Eierbecher im Bereich des Ausrichtungsbereiches 6 gleich lange Schlitze 10 auf.

Der Ausrichtungsbereich 6 ist desweiteren mehrstufig geformt.

Vom Haltebereich 7 ausgehend betrachtet schließt sich nach oben zunächst ein Bereich entsprechend dem ersten Ausführungsbeispiel mit einem Neigungswinkel, der zur durch den die untere Öffnung 5 begrenzenden unteren Rand definierten Ebene bevorzugt zwischen 70° und 80°, bevorzugt zwischen 74° und 76,5° beträgt.

An diesen Bereich schließt sich nach oben eine erste Stufe 15 an, mit einer senkrecht ausgerichteten Wandung, die eine nochmals verbesserte Ausrichtung der Eier im Eierhalter 1 ermöglicht.

Die Breite dieser Stufe 15, betrachtet in Richtung einer Symmetrieachse S der Wandung 3, beträgt dabei vorzugsweise zwischen 2mm und 4mm, besonders bevorzugt 3mm.

An diese erste Stufe 15 schließt sich zur oberen Kante 13 des Eierbechers 1 hin eine zweite Stufe 16 des Ausrichtungsbereichs 6 an, der Neigung zur durch den die untere Öffnung 5 begrenzenden unteren Rand definierten Ebene weniger als 70° beträgt.

Beiden Ausführungsvarianten gleich ist, dass eine Außenfläche der Wandung 3 im Bereich des Haltebereichs 7 bevorzugt mit einer sich in Umfangsrichtung erstreckenden Nut 8 versehen ist, um eine Adaptierbarkeit an unterschiedlich gestaltete Schienen zu ermöglichen.

Dadurch ist ermöglicht, dass eine entsprechend ausgebildete Schiene der Eierbearbeitungsvorrichtung in der Nut 8 aufgenommen werden kann, um den Eierhalter 1 an der Schiene festzulegen.

Die Nut 8 ist dabei bevorzugt von den ersten Schlitzen 9 durchbrochen.

### Bezugszeichenliste

- 1: Eierhalter
- 2: Aufnahmeraum
- 3: Wandung
- 4: obere Öffnung
- 5: untere Öffnung
- 6: Ausrichtungsbereich
- 7: Haltebereich
- 8: Nut
- 9: erster Schlitz
- 10: zweiter Schlitz
- 11: dritter Schlitz
- 12: Zunge
- 13: obere Kante
- 14: untere Kante
- 15: erste Stufe
- 16: zweite Stufe

- D1: Durchmesser
- D2: Durchmesser

- S: Symmetrieachse

## Patentansprüche

1. Auf einer Schiene festlegbarer Eierhalter (1) einer Eierbearbeitungsvorrichtung zur Aufnahme eines Eies, aufweisend eine einen Aufnahmeraum (2) bildende, zumindest teilweise kegelstumpfförmige Wandung (3), eine obere Öffnung (4) und eine untere Öffnung (5), wobei ein Durchmesser (D₁) der oberen Öffnung (4) größer ist als ein Durchmesser (D₂) der unteren Öffnung (5), **dadurch gekennzeichnet, dass** die Wandung (3) einen Ausrichtungsbereich (6) und einen Haltebereich (7) aufweist, wobei von einer die untere Öffnung (5) bildenden Kante der Wandung (3) mehrere erste Schlitze (9) in den Haltebereich (7) der Wandung (3) und von einer die obere Öffnung (4) bildenden Kante der Wandung (3) mehrere zweite und/oder dritte Schlitze (10, 11) in den Ausrichtungsbereich (6) der Wandung (3) eingebracht sind.

2. Eierhalter (1) nach Anspruch 1, **dadurch gekennzeichnet, dass** die Länge der zweiten Schlitze (10) im Ausrichtungsbereich (6) größer ist als die Länge der dritten Schlitze (11) im Ausrichtungsbereich (6).

3. Eierhalter (1) nach Anspruch 1 oder 2, **dadurch gekennzeichnet, dass** die ersten Schlitze (9) des Haltebereichs (7) auf einer gedachten Verlängerungslinie der dritten Schlitze (11) des Ausrichtungsbereichs (6) eingebracht sind.

4. Eierhalter (1) nach einem der vorstehenden Ansprüche, **dadurch gekennzeichnet, dass** der Ausrichtungsbereich (6) der Wandung (3) steiler ausgerichtet ist als der an die untere Öffnung (5) angrenzende Haltebereich (7) der Wandung (3).

5. Eierhalter (1) nach einem der vorstehenden Ansprüche, **dadurch gekennzeichnet, dass** der Ausrichtungsbereich (6) der Wandung (3) in Richtung einer Symmetrieachse (S) der Wandung (3) mehrstufig ausgebildet ist.

6. Eierhalter (1) nach einem der vorstehenden Ansprüche, **dadurch gekennzeichnet, dass** der Neigungswinkel des Ausrichtungsbereich (6) zur durch den die untere Öffnung (5) begrenzenden unteren Rand definierten Ebene zwischen 70° und 80°, bevorzugt zwischen 74° und 76,5° beträgt.

7. Eierhalter (1) nach einem der vorstehenden Ansprüche, **dadurch gekennzeichnet, dass** der Neigungswinkel einer dem Haltebereich (7) entfernten ersten Stufe (15) des Ausrichtungsbereichs (6) zur durch den die untere Öffnung (5) begrenzenden unteren Rand definierten Ebene 90° beträgt.

8. Eierhalter (1) nach Anspruch 7, **dadurch gekennzeichnet, dass** der Neigungswinkel einer zwischen einer oberen Kante (13) des Eierhalters (1) und der ersten Stufe (15) ausgebildeten zweiten Stufe (16) des Ausrichtungsbereichs (6) zur durch den die untere Öffnung (5) begrenzenden unteren Rand definierten Ebene weniger als 70° beträgt.

9. Eierhalter (1) nach einem der vorstehenden Ansprüche, **dadurch gekennzeichnet, dass** eine Außenfläche der Wandung (3) im Bereich des Haltebereichs (7) mit einer sich in Umfangsrichtung erstreckenden Nut (8) versehen ist.

10. Eierhalter (1) nach Anspruch 9, **dadurch gekennzeichnet, dass** die Nut (8) von den ersten Schlitzen (9) durchbrochen ist.

## Claims

1. Egg holder (1), which can be fixed on a rail, of an egg processing device for receiving an egg, comprising an at least partially frustoconical wall (3) forming a receiving space (2), an upper opening (4) and a lower opening (5), wherein a diameter (D₁) of the upper opening (4) is greater than a diameter (D₂) of the lower opening (5), **characterized in that** the wall (3) has an alignment region (6) and a retaining region (7), wherein a plurality of first slots (9) are introduced into the retaining region (7) of the wall (3) from an edge of the wall (3) forming the lower opening (5) and a plurality of second and/or third slots (10, 11) are introduced into the alignment region (6) of the wall (3) from an edge of the wall (3) forming the upper opening (4).

2. Egg holder (1) according to claim 1, **characterized in that** the length of the second slots (10) in the alignment region (6) is greater than the length of the third slots (11) in the alignment region (6).

3. Egg holder (1) according to claim 1 or 2, **characterized in that** the first slots (9) of the retaining region (7) are introduced on an imaginary extension line of the third slots (11) of the alignment region (6).

4. Egg holder (1) according to one of the preceding claims, **characterized in that** the alignment region (6) of the wall (3) is aligned more steeply than the retaining region (7) of the wall (3) adjacent to the lower opening (5).

5. Egg holder (1) according to one of the preceding claims, **characterized in that** the alignment region (6) of the wall (3) is formed in multiple steps in the direction of an axis of symmetry (S) of the wall (3).

6. Egg holder (1) according to one of the preceding claims, **characterized in that** the angle of inclination of the alignment region (6) to the plane defined by the lower edge delimiting the lower opening (5) is between 70° and 80°, preferably between 74° and 76.5°.

7. Egg holder (1) according to one of the preceding claims, **characterized in that** the angle of inclination of a first step (15) of the alignment region (6) remote from the retaining region (7) to the plane defined by the lower edge delimiting the lower opening (5) is 90°.

8. Egg holder (1) according to claim 7, **characterized in that** the angle of inclination of a second step (16), formed between an upper edge (13) of the egg holder (1) and the first step (15), of the alignment region (6) to the plane defined by the lower edge delimiting the lower opening (5) is less than 70°.

9. Egg holder (1) according to one of the preceding claims, **characterized in that** an outer surface of the wall (3) in the region of the retaining region (7) is provided with a groove (8) extending in the circumferential direction.

10. Egg holder (1) according to claim 9, **characterized in that** the groove (8) is pierced by the first slots (9).

## Revendications

1. Support d'œuf (1) pouvant être fixé sur un rail dans une installation de traitement d'œufs et destiné à recevoir un œuf, présentant une paroi (3) au moins partiellement tronconique formant un réceptacle (2), une ouverture supérieure (4) et une ouverture inférieure (5), dans lequel un diamètre (D₁) de l'ouverture supérieure (4) est plus grand qu'un diamètre (D₂) de l'ouverture inférieure (5), **caractérisé en ce que** la paroi (3) présente une zone d'orientation (6) et une zone de maintien (7), plusieurs premières fentes (9) étant ménagées à partir d'un bord de la paroi (3) qui forme l'ouverture inférieure (5) dans la zone de maintien (7) de la paroi (3) et plusieurs deuxièmes et/ou troisièmes fentes (10, 11) à partir d'un bord de la paroi (3) formant l'ouverture supérieure (4) dans la zone d'orientation (6) de la paroi (3).

2. Support d'œuf (1) selon la revendication 1, **caractérisé en ce que** la longueur des deuxièmes fentes (10) dans la zone d'orientation (6) est plus grande que celle des troisièmes fentes (11) dans la zone d'orientation (6).

3. Support d'œuf (1) selon la revendication 1 ou 2, **caractérisé en ce que** les premières fentes (9) de la zone de maintien (7) sont formées sur une ligne imaginaire prolongeant les troisièmes fentes (11) de la zone d'orientation (6).

4. Support d'œuf (1) selon l'une des revendications précédentes, **caractérisé en ce que** la zone d'orientation (6) de la paroi (3) est plus abrupte que la zone de maintien (7) de la paroi (3) limitrophe de l'ouverture inférieure (5).

5. Support d'œuf (1) selon l'une des revendications précédentes, **caractérisé en ce que** la zone d'orientation (6) de la paroi (3) est formée de plusieurs gradins en direction d'un axe de symétrie (S) de la paroi (3).

6. Support d'œuf (1) selon l'une des revendications précédentes, **caractérisé en ce que** l'angle d'inclinaison de la zone d'orientation (6) par rapport au plan définissant le bord inférieur qui délimite l'ouverture inférieure (5) est compris entre 70° et 80°, de préférence entre 74° et 76,5°.

7. Support d'œuf (1) selon l'une des revendications précédentes, **caractérisé en ce que** l'angle d'inclinaison d'un premier gradin (15) de la zone d'orientation (6) éloigné de la zone de maintien (7) par rapport au plan défini par le bord inférieur qui délimite l'ouverture inférieure (5) est de 90°.

8. Support d'œuf(1) selon la revendication 7, **caractérisé en ce que** l'angle d'inclinaison d'un deuxième gradin (16) de la zone d'orientation (6) formé entre un bord supérieur (13) du support d'œuf (1) et le premier gradin (15) par rapport au plan définissant le bord inférieur qui délimite l'ouverture inférieure (5) est inférieur à 70°.

9. Support d'œuf (1) selon l'une des revendications précédentes, **caractérisé en ce qu'**une surface extérieure de la paroi (3) est munie au niveau de la zone de maintien (7) d'une rainure (8) qui s'étend dans le sens de la circonférence.

10. Support d'œuf (1) selon la revendication 9, **caractérisé en ce que** la rainure (8) est traversée par les premières fentes (9).
